Europäisches Patentamt

European Patent Office

Office européen des brevets

(19)

(11) Publication number: **0 158 484**
**A2**

(12) **EUROPEAN PATENT APPLICATION**

(21) Application number: 85302151.7

(22) Date of filing: 28.03.85

(51) Int. Cl.⁴: **G 01 N 1/06**

(30) Priority: 07.04.84 DE 3413250

(43) Date of publication of application:
16.10.85 Bulletin 85/42

(84) Designated Contracting States:
AT FR SE

(71) Applicant: PARKE, DAVIS & COMPANY
201 Tabor Road
Morris Plains New Jersey 07950(US)

(72) Inventor: Berleth, Manfred, Ing. grad.
Schulstrasse 34
D-6904 Eppelheim(DE)

(74) Representative: Coxon, Philip et al,
Eric Potter & Clarkson 14 Oxford Street
Nottingham NG1 5BP(GB)

(54) Clamping mechanism for a cutter of a microtome.

(57) In a clamping mechanism for a blade-shaped microtome cutter which is clampable by its back surface and by its opposite front surface in a cutter mounting, whilst the cutting edge of the cutter protrudes out of the mounting, the mounting comprises a body portion, a cutter support member connectable to the body portion, and a clamping member connected to the body portion, while the support member is provided with a recess in which the cutter is supported by a part of its back surface and by its narrow rear edge which is located opposite the cutting edge. The clamping member is adapted to be pressed by at least one clamping jaw against the front surface of the cutter.

EP 0 158 484 A2

Croydon Printing Company Ltd.

CLAMPING MECHANISM FOR A CUTTER OF A MICROTOME

This invention relates to a clamping mechanism for a microtome cutter, particularly for a blade-shaped cutter, wherein the cutter is clampable by its back and front surfaces in a cutter mounting, while the cutting edge of the cutter protrudes out of the cutter mounting.

Blade-shaped microtome cutters of this type may consist of carbide, of steel or of ceramics, for example, or else they may be constructed as one-way blades. All of these blade-shaped cutters made of the widest variety of materials may exhibit different dimensions, for example different edge geometries, as a function of the specimens to be cut into thin sections. In order to permit such blade-shaped cutters with different geometries to be clamped in one and the same known clamping mechanism, when required an interlay is inserted between the narrow rear edge of the cutter and the cutter mounting, the interlay being so dimensioned that the cutting edge protrudes out of the cutter mounting by a definite interval. This means that different interlays are required for cutters of different dimensions. In the majority of cases, interlays are cut appropriately to fit from cardboard or from board. However, it is scarcely possible with these known interlays of cardboard or board to clamp a blade-shaped cutter in the clamping mechanism with great accuracy, that is to say so that the cutting edge of the cutter is precisely aligned relative to the specimen to be cut into thin sections. However, an imprecisely aligned cutter becomes worn away disproportionately rapidly, so that the precision of the thin sections is prejudiced. In order to obtain accurate thin sections it is necessary to change the known one-way blades very frequently. However, the consumption of one-way blades is relatively high as a result. Also the work involved in changing the one-way blades, and hence the down time of the microtome in proportion to its duty time, is excessive.

It is an object of the present invention to improve a clamping mechanism of the foregoing type, so that blade-shaped cutters in particular of the widest variety of geometries can be clamped with high precision in an extremely simple manner, whilst the clamping mechanism is of extremely simple construction.

According to the invention there is provided a clamping mechanism for a microtome cutter having a cutting edge and a narrow rear edge opposite the cutting edge, and a back surface and a front surface opposite the back surface, the cutter being clampable by its back and front surfaces in a cutter mounting whilst the cutting edge of the cutter protrudes out of the mounting, the cutter mounting comprising a body portion, a cutter support member connectable to the body portion, and a clamping member connected to the body portion, the cutter support member being provided with a recess in which the cutter is located by a part of its back surface and by its narrow rear edge, and the clamping member having at least one clamping jaw adapted to press against the front surface of the cutter.

The construction of the cutter mounting with a body portion and with a cutter support member connectable thereto has the particular advantage that a support member with a recess adapted to the geometry of the cutter can be used for each cutter having a specific edge geometry, so that any desired blade-shaped cutter fits reliably and with high accuracy into the recess of the support member and is clampable in a simple manner by means of the clamping member. Due to the fact that the blade-shaped cutter abuts snugly and directly by its narrow rear edge in the recess of the support member at all times, the cutting edge is also aligned precisely at all times relative to the clamping mechanism of the invention. The wear of the cutting edge is thereby reduced to a minimum, so that the quality of the cut thin sections is substantially improved.

The body portion may preferably be of wedge-shaped construction, while the cutter support member may be arranged on a first wedge surface of the body and the clamping member on the second wedge surface, so that the recess and the clamping jaw form a gap which is dimensionally adapted to the cutter. As a result of the wedge-shaped construction of the body portion and of the arrangement of the support member on the first wedge surface and of the clamping member on the second wedge surface, a simple construction of the clamping mechanism and a precisely defined gap between these two components of the clamping mechanism of the invention is achieved, which gap is adapted to a blade-shaped cutter. The gap may have a transverse dimension which is adapted to the length of the blade-shaped cutter. That is to say, it may be of equal length, or somewhat longer or somewhat shorter than the length of the cutter. The blade-shaped cutter may advantageously be slid along its length and clamped, so that it is easily possible to use the cutter along its entire edge length. This results in a substantially longer life from a blade-shaped cutter, which is of great importance particularly in the case of one-way cutters.

The recess in the cutter support member may comprise an inclined surface which is adapted to abut the back surface of the cutter and which is bounded by a shoulder adapted to support the narrow rear edge of the cutter. Such a recess can be produced extremely simply and with great precision, so that the blade-shaped cutter can be clamped in the mechanism of the invention with great accuracy at all times. Consequently highly accurate thin section work can be performed irrespective of the material of the specimen to be thinly sectioned.

Furthermore, the cost of exchanging the blade-shaped cutter worn away after prolonged use for a new cutter is advantageously reduced to a minimum.

It has been found advantageous to make the cutter support member of planar construction and to fasten the support member to the first wedge surface of the body portion by means of screws. Such a flat support member occupies only a very small space, which is of the utmost significance for thin section microtomes in order to permit high quality thin section work to be performed with greatest ease of observation. A further advantage of such a planar support member lies in its excellent mechanical stability, so that a cutter clamped in such a clamping mechanism works with great accuracy at all times. Because - as has already been explained above - the useful life of a cutter clamped in a clamping mechanism according to the invention is substantially improved, it is no longer necessary to change the cutter as frequently as in known clamping devices for such blade-shaped cutters, so that it is sufficient and presents no problems to fasten the planar cutter support member to the first wedge-surface of the body portion simply by screws.

In one embodiment of the invention the clamping member is adjustable relative to the second wedge surface. This adjustment may be effected by means of an eccentric which may be provided between the clamping member and the wedge-shaped body portion. The adjustment of the clamping member relative to the body portion may also be achieved by means of screw spindles and the like, for example. However, the adjustment of the clamping member by an eccentric has the advantage that it can be performed extremely simply and with time economy.

The clamping member may be adjustable perpendicularly and/or parallel to the second wedge surface. Perpendicular adjustability of the clamping member relative to the second wedge surface of the body portion has the particular advantage here that different gap widths between the recess of the cutter support member and the clamping jaw of the clamping member can be adjusted and compensated for. In this manner the clamping mechanism can be adjusted and/or adapted very simply to the widest variety of cutter thicknesses and cutter thickness tolerances.

It has been found particularly advantageous to construct the body portion with a rear surface thereof pivotable over a uniformly curved sliding surface formed in a base, the axis of rotation of which surface coincides with the cutting edge of the cutter. The body portion may be clampable relative to the base by locking means. Due to this pivotable arrangement of the body portion about a uniformly curved sliding surface, whereby the cutting edge lies precisely along the axis of rotation of the body portion, it is simple to adjust to whatever desired cutting angle is best adapted to the specimen to be thinly sectioned, and thereby further to improve the section work.

In summary, it is possible with the clamping mechanism of the invention to clamp a very wide variety of cutters, and in such a way that the useful life of a blade-shaped cutter is comparatively very long.

Further particulars, features and advantages will be apparent from the following description of an example of a clamping mechanism according to the invention and which is illustrated in the accompanying drawings, in which:-

Figure 1 is a plan view of the clamping mechanism;

Figure 2 shows a section along the line II-II in Figure 1; and

Figure 3 is a section through an alternative cutter support member with a blade-shaped cutter.

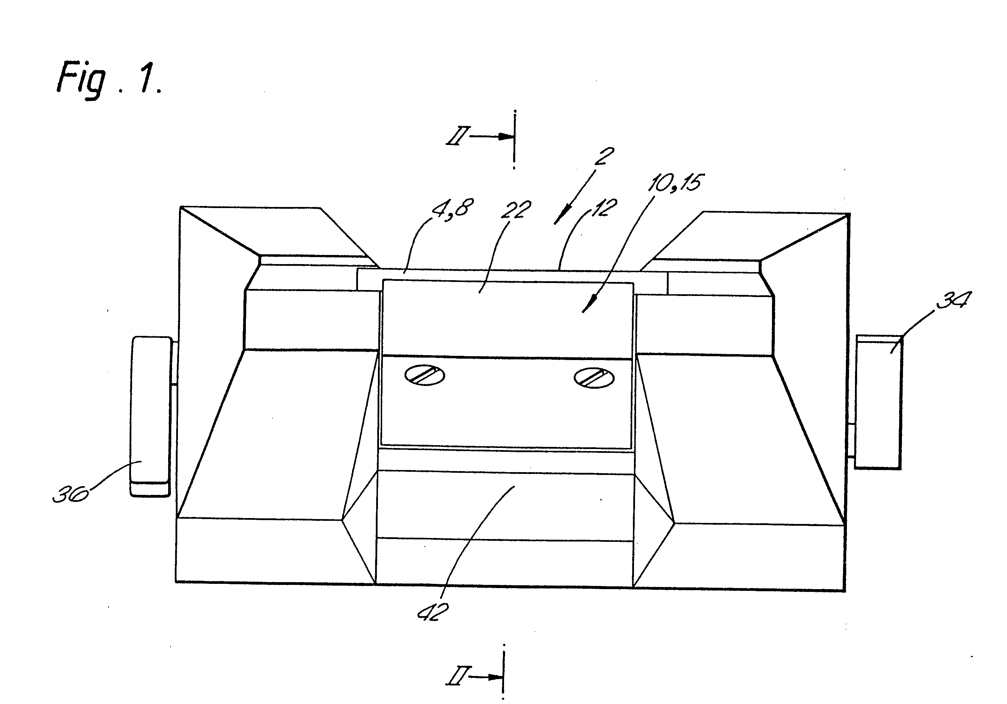

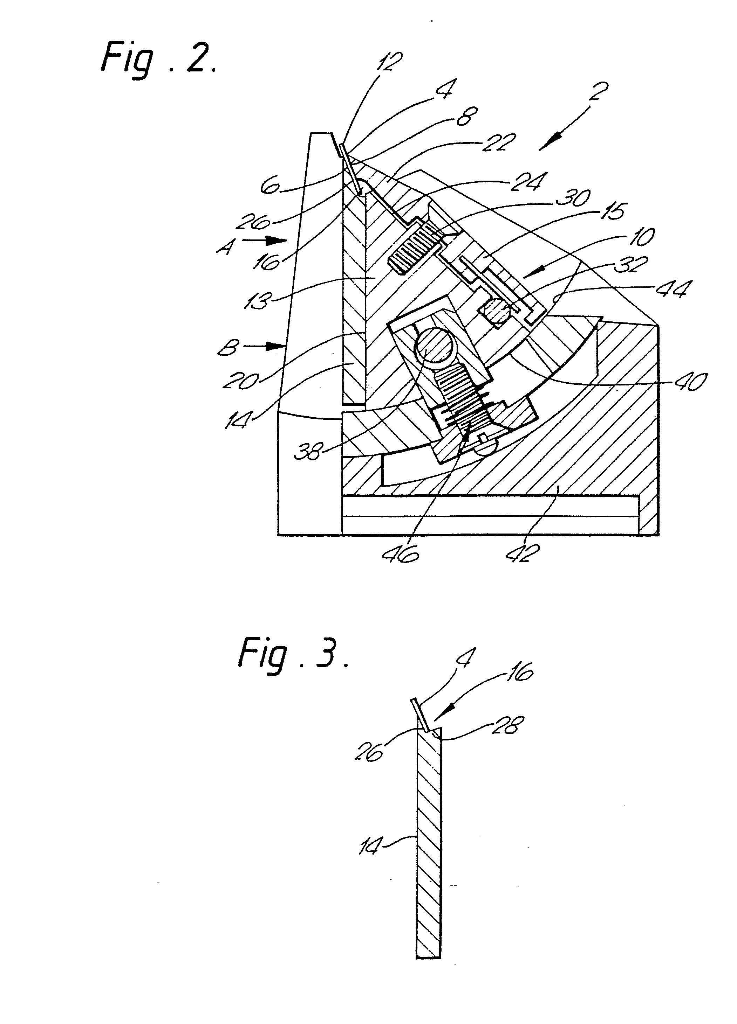

Figures 1 and 2 show a clamping mechanism 2 for a blade-shaped microtome cutter 4, wherein the cutter is clampable by its back surface 6 and by its front surface 8 opposite the rear surface 6 in a cutter mounting 10, whilst the cutting edge 12 of the cutter protrudes out of the cutter mounting. As may be seen particularly clearly from Figure 2, the cutter mounting 10 comprises a body portion 13, a cutter support member 14 connectable to the body portion, and a clamping member 15 connected to the body portion. As may be seen from Figure 3, the cutter support member 14 is in the form of a plate and has on its upper edge a recess 16 in which the cutter 4 is located by a part of its back surface 6 and by its narrow rear edge 18 located opposite the cutting edge 12. The flat support member 14 is fastened to a first wedge surface 20 of the body portion of the clamping mechanism 2 by means of screws, which are indicated by the arrows A and B between Figures 2 and 3.

The cutter 4 illustrated in Figure 3 has a smaller width than the cutter 4 illustrated in Figure 2, so that the recess 16 in the cutter support member 14 of Figure 3 has been given a different, more compact shape than the recess 16 in the support member 14 illustrated in Figure 2.

The clamping member 15 is provided with a clamping jaw 22 adapted to press against the front surface 8 of the blade-shaped cutter 4, whereby the cutter is clamped in the clamping mechanism 2.

As may be seen clearly from Figure 2, the body portion 13 is of wedge-shaped construction, and the cutter support member 14 is arranged on the first wedge surface 20 of the body portion, and the clamping member 15 on the second wedge surface 24, so that the recess 16 in the support member 14 and the clamping jaw 22 of the clamping member 15 form a gap which is dimensionally adapted to the blade-shaped cutter 4.

It is clear from Figures 2 and 3 that the recess 16 in the cutter support member 14 comprises an inclined surface 26, which is adapted to abut the back surface of the cutter 6, and which is bounded by a shoulder 28 adapted to support the narrow rear edge 18 of the cutter. Due to this construction of the recess, which is precisely adapted to a blade-shaped cutter, the cutter is retained and clamped in the clamping mechanism with great accuracy and extremely stably.

The clamping member 15 is adjustable relative to the second wedge surface 24 of the body portion 13. This adjustability of the clamping member is obtained by means of screws 30 perpendicular to the second wedge surface 24, so that the different thicknesses of different cutters 4 can be simply compensated for, and also by means of an eccentric 32, parallel to the second wedge surface 24, so that a blade-shaped cutter 4 can be clamped simply in the clamping mechanism. The eccentric 32 is actuated by means of the hand lever 34 illustrated in Figure 1.

A further hand lever 36 serves to actuate an eccentric 38, by means of which the body portion 13 can be locked by its rear surface 40 on a base 42 of the microtome. The body portion is pivotable upon its rear surface upon a uniformly curved sliding surface 44 formed in the base 42, the axis of rotation of which coincides exactly with the cutting edge 12 of the blade-shaped cutter 4. The body portion is clampable relative to the base by locking means 46 cooperating with the eccentric 38. In this manner the cutting angle of the blade-shaped can be very simply adjusted to a desired value.

CLAIMS

1. A clamping mechanism for a microtome cutter having a cutting edge and a narrow rear edge opposite the cutting edge, and a back surface and a front surface opposite the back surface, the cutter being clampable by its back and front surfaces in a cutter mounting whilst the cutting edge of the cutter protrudes out of the mounting, the cutter mounting comprising a body portion, a cutter support member connectable to the body portion, and a clamping member connected to the body portion, the cutter support member being provided with a recess in which the cutter is located by a part of its back surface and by its narrow rear edge, and the clamping member having at least one clamping jaw adapted to press against the front surface of the cutter.

2. A clamping mechanism according to Claim 1, wherein the body portion is of wedge-shaped construction, and the cutter support member is arranged on a first wedge surface of the body portion, and the clamping member on a second wedge surface of the body portion, whereby the recess and the clamping jaw form a gap which is dimensionally adapted to the cutter.

3. A clamping mechanism according to Claim 1, wherein the recess in the cutter support member comprises an inclined surface which is adapted to abut the back surface of the cutter and which is bounded by a shoulder adapted to support the narrow rear edge of the cutter.

4. A clamping mechanism according to Claim 2, wherein the cutter support member is of planar construction and is fastened to the first wedge surface of the body portion by means of screws.

5. A clamping mechanism according to Claim 2, wherein the clamping member is adjustable relative to the second wedge surface.

6. A clamping mechanism according to Claim 5, wherein the clamping member is adjustable perpendicularly and/or parallel to the second wedge surface.

7. A clamping mechanism according to Claim 1, wherein the body portion is pivotable by a rear surface thereof over a uniformly curved sliding surface formed in a base, the axis of rotation of which surface is coincident with the cutting edge of the cutter, and is clampable relative to the base by locking means.

8. A clamping mechanism for a cutter of a microtome substantially as herein described with reference to and as shown in the accompanying drawings.

Fig . 1.

*Fig . 2.*

*Fig . 3.*